# EUROPEAN PATENT SPECIFICATION

(11) **EP 3 653 852 B1**
(45) Date of publication and mention of the grant of the patent: **22.01.2025**
(21) Application number: 19203250.6
(22) Date of filing: 15.10.2019
(51) Int. Cl.: F01N 3/10, F01N 13/10, F01N 1/02

(54) **EXHAUST RECEIVER ARRANGEMENT OF A LARGE TWO-STROKE ENGINE AND LARGE TWO-STROKE ENGINE**
ABGASSAMMLERVORRICHTUNG FÜR EINEN GROSSEN ZWEITAKTMOTOR UND GROSSER ZWEITAKTMOTOR
AGENCEMENT DE COLLECTEUR D'ÉCHAPPEMENT D'UN GROS MOTEUR À DEUX TEMPS ET GROS MOTEUR À DEUX TEMPS

(30) Priority: 13.11.2018 EP 18206015
(43) Date of publication of application: 20.05.2020
(73) Proprietor: WinGD AG, 8400 Winterthur (CH)
(72) Inventor: Scorocco, Pietro, 8408 Winterthur (CH); Bellucci, Valter, 5507 Mellingen (CH)
(74) Representative: IPS Irsch AG

(56) References cited:
- EP-A2- 0 272 769
- GB-A- 1 164 018
- US-A- 1 760 557
- US-A- 2 124 489
- US-A- 3 972 184

## Description

The invention relates to an exhaust receiver arrangement for a large two-stroke engine in accordance with the preamble of the independent claim. The invention further relates to a large two-stroke engine.

Large two-stroke engines, which can be designed for example as large two-stroke diesel engines with longitudinal scavenging, are often used as main propulsion units for ships or also in stationary operation, for example for driving large generators for the production of electrical power. Here as a rule the engines are in constant operation over a considerable period of time which makes high demands on the operating reliability and availability. For this reason, for the operators, long and predictable intervals between services, low degrees of wear and, an economical use of fuel and operating materials are central criteria for the operation of the engine. Large engines and in particular large two-stroke engines have typically cylinders with an inner diameter (bore) of at least 200 mm. Nowadays large engines are operated having a plurality of cylinders, each of which has a bore of up to 960 mm or even more.

Especially in view of the growing requirements regarding protection of the environment the operation of large two-stroke engines, such as large diesel engines, becomes more and more demanding. Large diesel engines are mostly operated with heavy oil that requires specific measures with regard to the exhaust resulting from the combustion. In view of the stronger statutory provisions regarding the limitation of exhaust a need exists now for several years for large engines, which can be operated with at least two different fuels. These different fuels may be e.g. two different liquid fuels or a liquid fuel and a gaseous fuel. Such engines are usually called multi-fuel engines and they can be switched during operation from the combustion of one fuel to the combustion of a second, different fuel and vice versa. Liquid or gaseous fuels that may be combusted alternatively in a multi-fuel large diesel engine comprise beside heavy oil, marine diesel or diesel in particular alcohols such as methanol or ethanol, natural gases such as LNG (liquefied natural gas), emulsions such as MSAR (multiphase superfine atomised residue), or suspensions such as a suspension of pulverized coal in water.

A specific type of a multi-fuel engine is an engine that is usually referred to as "dual-fuel engine" or "dual-fuel motor". These are engines that can be operated with two different fuels. In a gas mode a gas, for example natural gas like LNG (liquefied natural gas) or another suited gas for operating an internal combustion engine is used for the combustion in the cylinders. In a liquid mode a suited liquid fuel like gasoline, diesel, marine diesel or heavy oil is used for the combustion in the cylinders of the same engine.

Thus, a large two-stroke engine may be designed as an engine for the combustion of only a single fuel, for example a gaseous fuel such as LNG, or a liquid fuel such as heavy oil or diesel, or the engine may be designed as a multi-fuel engine, as a dual-fuel engines and in particular as such a large engine, which can be operated beside the diesel operation, that is characterized by the self-ignition of the fuel, also in an Otto operation, that is characterized by an external ignition, or in a mixed form of these two operations.

Within the scope of this application the term "large diesel engine" or the like encompasses also multi-fuel engines, dual-fuel engines and such large engines, which can be operated beside the diesel operation, also in an Otto operation, that is characterized by an external ignition, or in a mixed form of these two operations. More generally the term "large diesel engine" also encompasses large engines, which can be operated alternatively with at least two different fuels, wherein at least one of the fuels is suited to operate the engine according to the diesel method of operation.

Usually, large two-stroke engines comprise a plurality of cylinders each having a reciprocating piston and a combustion chamber for the combustion of a fuel. For discharging the gas from the combustion chamber each cylinder comprises an exhaust valve for opening a flow connection between the respective combustion chamber and an exhaust duct of the cylinder. In modern large two-stroke engines the opening and the closing of the exhaust valves is electronically controlled.

Each exhaust duct opens out into an exhaust receiver, in which the exhaust gases of all the cylinders are collected. From the exhaust receiver the exhaust gas is at least partially supplied to a turbocharger unit for driving the turbine of the turbocharger.

The turbocharger feeds an intake receiver with scavenging air, which is also referred to as charging air. The intake receiver is in fluid communication with the scavenging openings of all cylinders, so that each cylinder may be provided with air when the respective scavenging openings of the respective cylinder are opened. Usually, the opening and the closing of the respective scavenging openings is controlled by the movement of the piston in the respective cylinder.

Due to the working cycles of the cylinders pressure fluctuations are generated in the exhaust receiver. Since the exhaust receiver is in fluid communication with the combustion chambers of all cylinders, such pressure pulsations result in a cylinder unbalance, because the pressure in the exhaust receiver, against which the gas is discharged from a respective cylinder, may vary for the different cylinders. This means for example, that the quality of the scavenging of a specific cylinder depends on the instantaneous pressure in the exhaust receiver. If this instantaneous pressure is quite high, when the exhaust valve of the cylinder is open, the scavenging may be worse as if there were a lower pressure in the exhaust receiver.

In addition, the pressure pulsation in the exhaust receiver may also cause pressure pulsations in the intake receiver. During the working cycle of a two-stroke engine there is typically a period, in which both the exhaust valve and the scavenging openings of the same cylinder are open, e.g. during the scavenging phase of the cylinder. Since both the exhaust valve and the scavenging openings of the same cylinder are open, a pressure pulsation in the exhaust receiver can also cause pressure pulsations or pressure fluctuations in the intake receiver.

These pressure fluctuations or pulsations are detrimental for the operation of the large two-stroke engine, because they cause for example an unbalance of the scavenging in the different cylinders, even if the timing of the opening and the closing of the exhaust valve were the same for all cylinders.

This unbalance is in particular detrimental, if the large engine is operated in a mode that is particularly sensitive to the air fuel ratio in the combustion chamber, for example if the large engine is operated in a gas mode or in an Otto operation. If e.g. a dual-fuel motor is operated in a low pressure gas mode, the gaseous fuel is inserted into the cylinder during the compression stroke of the piston. For an as efficient as possible and low-emission combustion process the correct ratio of the gas (fuel) and air has to be realized in the combustion chamber. The fuel air ratio is usually measured by the lambda value. Pressure pulsations in the exhaust receiver and/or in the intake receiver may cause undesired changes in the lambda value and thus both reduce the efficiency of the engine and increase the creation of pollutants.

EP0272769A2 discloses an exhaust manifold incorporating a resonance chamber that attenuates specific acoustic frequencies and reduces overall exhaust noise.

US2124489A relates to a silencer for internal combustion engines that reduces noise by incorporating expansion chambers near the cylinder outlets, allowing rapid gas expansion and absorption of sound through materials like steel wool.

GB1164018A relates to a turbocharger system that combines pulsed and constant pressure operation by using valves in combination with an exhaust gas receiver.

US3972184A aims to extend the life of catalytic converters by routing exhaust gases through the catalyst only during the engine's initial warm-up period when emissions are highest.

US1760557A shows an exhaust manifold featuring a pot-like chamber that reduces exhaust noise by causing gas vibrations out of phase with engine exhaust impulses.

Starting from this state of the art it is therefore an object of the invention to propose an exhaust receiver arrangement for a large two-stroke engine, which ensures considerably reduced pressure fluctuations or oscillations within the exhaust receiver. Furthermore, it is an object of the invention to propose a large two-stroke engine with such an exhaust receiver arrangement.

The subject of the invention satisfying these objects is characterized by the features of the independent claim.

Thus, in accordance with the invention, an exhaust receiver arrangement for a large two-stroke engine having a plurality of cylinders is proposed, wherein the exhaust receiver arrangement comprises a tubular exhaust receiver for collecting exhaust gas from the cylinders, with the exhaust receiver extending from a first end in an axial direction to a second end and being designed for extending along the cylinders, and wherein the exhaust receiver comprises a plurality of inlet openings for receiving exhaust ducts of the cylinders, and wherein a damping device is provided for reducing pressure pulsations in the exhaust receiver, wherein the damping device comprises at least one resonance absorber.

By providing a resonance absorber connected to the exhaust receiver pressure pulsations or pressure oscillations in the exhaust receiver are considerably reduced because the resonance absorber damps such pressure fluctuations.

According to the invention, each resonance absorber is configured to dampen a resonance frequency of the exhaust receiver.

Thus, the resonance absorber is matched to a resonance frequency of the exhaust receiver, so that the pressure oscillation at the resonance frequency is remarkably attenuated or even completely suppressed. The resonance frequency or the resonance frequencies of the exhaust receiver or the exhaust manifold may be determined by an acoustic analysis of the system that may be performed by measurements and/or by calculations and/or by simulations. Once the resonance frequency of the exhaust receiver is known, the resonance absorber may be designed and configured in such a manner that it dampens the pressure pulsations at resonance frequency.

Of course it is also possible that the damping device comprises a plurality of resonance absorbers for damping different frequencies of the pressure pulsations.

By considerably reducing the pressure pulsations in the exhaust receiver the unbalance in particular of the scavenging process for the different cylinders is remarkably reduced. This is particularly advantageous when the large engine is operated in a mode that is very sensitive to the air-fuel ratio (Lambda), e.g. in a gas mode.

According to a preferred embodiment each resonance absorber is configured to dampen a frequency of at most 50 Hertz, preferably of at most 30 Hertz. In particular in large two-stroke engines the resonance frequencies of the exhaust receiver are typically at most 50 Hertz and often less than 30 Hertz. Thus, when matching the resonance absorber(s) to such frequencies of at most 50 Hertz and preferably at most 30 Hertz the pressure pulsations in the exhaust receiver may be at least considerably reduced.

Preferably, the resonance absorber is designed as a Helmholtz resonator having a resonator volume and a resonator neck connected with the resonator volume, wherein the resonator neck is in fluid communication with the tubular exhaust receiver. The Helmholtz resonator works according to a mass-spring system, wherein the mass is represented by the gas in the resonator neck and the spring is represented by the gas in the resonator volume. Therefore, the eigenfrequency of the Helmholtz resonator depends on the geometry of the resonator neck and the volume of the resonator volume. Thus, it is quite easy to match the eigenfrequency of the Helmholtz resonator to a resonance frequency of the exhaust receiver.

According to a preferred embodiment the neck of the Helmholtz resonator is connected to the first end or to the second end of the exhaust receiver.

Since at the first end and at the second end of the exhaust receiver there is always an antinode of the pressure oscillation, the Helmholtz resonator damps the pressure pulsation particularly efficiently, when the Helmholtz resonator is arranged at the first end or at the second end of the exhaust receiver.

According to another preferred embodiment the damping device comprises at least two resonance absorbers, each of which is designed as a Helmholtz resonator, and wherein the first end and the second end of the exhaust receiver are connected to the resonator neck of one of the resonance absorbers.

According to a preferred design each resonator neck is extending in the axial direction. I.e. each resonator neck is arranged in line with the exhaust receiver.

According to another preferred design each resonator neck is extending perpendicular to the axial direction.

It is a preferred arrangement when each resonance absorber is arranged above the exhaust receiver or below the exhaust receiver. The terms "above" and "below" refer to the usual operating position of the exhaust receiver. Usually, the exhaust receiver is arranged on top of the cylinders so that the cylinders are located below the exhaust receiver.

According to the invention, the exhaust receiver comprises two tubular elements, which are arranged in-line, and which are connected by a transition element arranged between the two tubular elements. According to a preferred design, in such an arrangement the first half of the cylinders are connected to the one of the tubular elements and the second half of the cylinders are connected to the other of the tubular elements. If, for example, the large engine comprises twelve cylinders arranged in a line, the first six cylinders are connected to the first tubular element and the remaining cylinders seven to twelve are connected to the second tubular element of the exhaust receiver.

In such an arrangement it is another preferred design, that the resonance absorber is connected to the transition element.

According to another preferred design the transition element and one of the tubular elements are configured to form a Helmholtz resonator.

According to yet another preferred embodiment the resonance absorber is arranged inside the exhaust receiver.

When the resonance absorber is arranged inside the exhaust receiver, the resonance absorber may comprise a perforated tube arranged coaxially with the exhaust receiver.

According to yet another preferred embodiment, in which the resonance absorber comprises a Helmholtz resonator, the resonator volume coaxially surrounds the exhaust receiver.

In addition, according to the invention a large two-stroke engine is proposed, in particular a large two-stroke diesel engine with longitudinal scavenging, comprising a plurality of cylinders, wherein each cylinder has a combustion chamber for a fuel, and further comprising an exhaust receiver arrangement according to the invention.

According to a preferred embodiment the large two-stroke engine is designed as a dual-fuel large diesel engine, which is operable in a gas mode, in which a gaseous fuel is supplied to the combustion chambers, and which is operable in a liquid mode, in which a liquid fuel is supplied to the combustion chambers.

In particular, the large engine may be designed as a dual-fuel engine for the combustion of a liquid fuel, preferably heavy oil, and for the combustion of a gas, wherein it is preferred that the gas is supplied to the cylinders at a low pressure of at most 50 bar, preferably at most 20 bar.

Further advantageous measures and preferred embodiments of the invention result from the dependent claims.

The invention will now be explained in more detail with the help of the schematic drawing, which show:
- Fig. 1:: a schematic illustration of an embodiment of an exhaust receiver arrangement according to the invention, and
- Fig. 2 - Fig. 10:: schematic illustrations of further embodiments of exhaust receiver arrangements according to the invention.

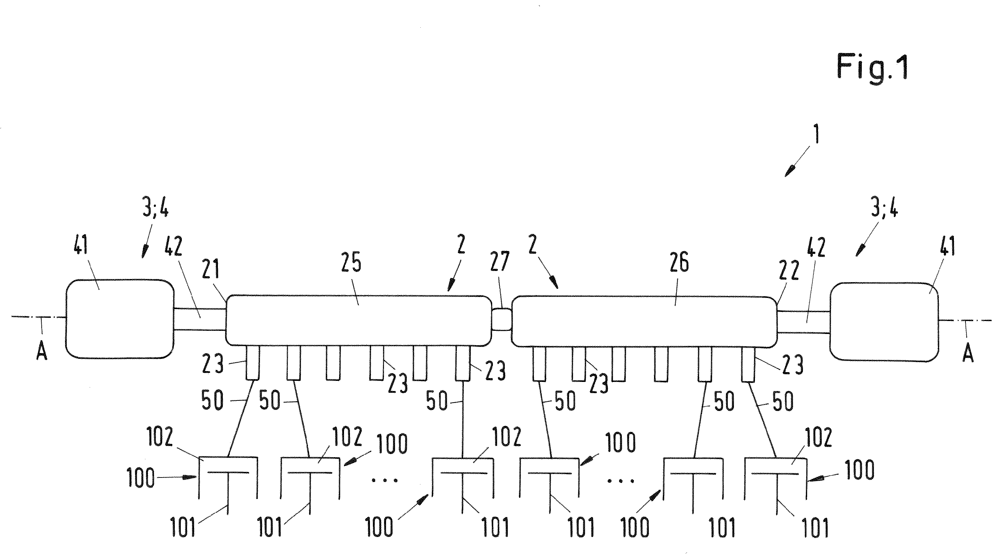

Fig. 1 shows in a schematic representation an embodiment of an exhaust receiver arrangement according to the invention, which is designated in its entity with reference numeral 1. The exhaust receiver arrangement 1 is part of a large two-stroke engine having a plurality of cylinders 100, for example twelve cylinders 100. In Fig. 1 only some of the cylinders 100 of the large two-stroke engine are shown.

In the following description reference is made by way of example to an embodiment, wherein the large two-stroke engine is designed as a large two-stroke diesel engine with longitudinal scavenging. Since these large diesel engines are well known in the art, there is no need for a detailed description. Furthermore, reference is made by way of example to the application that the large diesel engine is the main propulsion unit of a ship or a vessel.

Of course, the invention is not restricted to this specific type of a large two-stroke engine. In particular, the large two-stroke engine may be any type of large diesel engine as they are used for example as main propulsion units for ships or also in stationary operation, for example for driving large generators for the production of electrical power. In particular, it is also possible that the large two-stroke engine is designed as a multi-fuel engine for the combustion of a plurality of different liquid and/or gaseous fuels or as a dual-fuel engine for the combustion of a liquid fuel and for the combustion of a gas, for example natural gas. The large engine may also be designed for being operated with more than two different fuels.

The large two-stroke engine may have up to twelve or even up to fourteen cylinders 100. In each cylinder 100 a piston 101 is arranged for a reciprocating movement between a top dead center and a bottom dead center. The top side of the piston and a cylinder cover (not shown in detail) together with the cylinder wall or a cylinder liner of the cylinder 100 are delimiting a combustion chamber 102, in which a fuel is injected for the combustion. Each cylinder 100 further comprises an exhaust valve (not shown in detail) through which the exhaust gases are discharged from the combustion chamber to an exhaust duct 50. Each exhaust duct 50 is connected to a respective inlet opening 23 of an exhaust receiver 2 of the exhaust receiver arrangement 1. In the exhaust receiver 2 the exhaust gases of all the cylinders 100 are collected.

In a manner known as such the exhaust receiver 2 is connected to a turbocharger system (not shown) as well as to an exhaust pipe for discharging the exhaust gas to the environment. At least a part of the exhaust gas is guided to the turbine of the turbocharger for rotating said turbine.

It goes without saying that the exhaust receiver arrangement 1 may comprise additional features, for example catalytic converter units for purifying the exhaust gas or a waste gate for controlling the amount of exhaust gas that is delivered to the turbocharger.

The turbocharger feeds an intake receiver (not shown) with scavenging air, which is also referred to as charging air. The intake receiver is in fluid communication with scavenging ports (not shown) of the cylinders 100. Typically the scavenging ports are located at the lower end of the respective cylinder 100, i.e. the end opposing the exhaust valve of the respective cylinder 100.

By means of the intake receiver and the scavenging ports each cylinder 100 may be provided with air when the respective scavenging ports of the respective cylinder 100 are opened. Usually, the opening and the closing of the respective scavenging ports is controlled by the movement of the piston 101 in the respective cylinder 100.

The working cycle of the large two-stroke engine starts when the respective piston 101 is in the top dead center. The combustion chamber 102 has its minimum volume and the combustion of the fuel takes place. The piston 101 starts its downward movement (expansion stroke). During the expansion stroke the exhaust valve will be opened, so that the exhaust gas is discharged through the exhaust duct 50 into the exhaust receiver 2. By the further downward movement of the piston 101 the scavenging ports of the cylinder 100 become uncovered, so that the scavenging air may enter the cylinder 100. The piston reaches the bottom dead center and starts its upward movement (compression stroke). During the compression stroke the piston 101 closes the scavenging ports and the exhaust valve is closed. During the compression stroke when both the exhaust valve and the scavenging ports are closed, the fuel is injected into the combustion chamber 102. Of course, the timing of the fuel injection depends on the actual fuel that is used and on the operational mode, e.g. Diesel or Otto operation. When the piston 101 is near the top dead center the combustion takes place either by self-ignition or by induced ignition, and a new working cycle starts.

As it is nowadays state of the art the large two-stroke engine is operated in a fully electronically controlled manner. An engine control unit (not shown) operates and controls all functions of the large two-stroke engine, for example the operation of the exhaust valves for the gas exchange, the lubrication of the cylinders 100 and the injection process for the fuel, by way of electric or electronic signals and commands. In addition, the engine control unit receives information from several detectors, sensors or measuring devices.

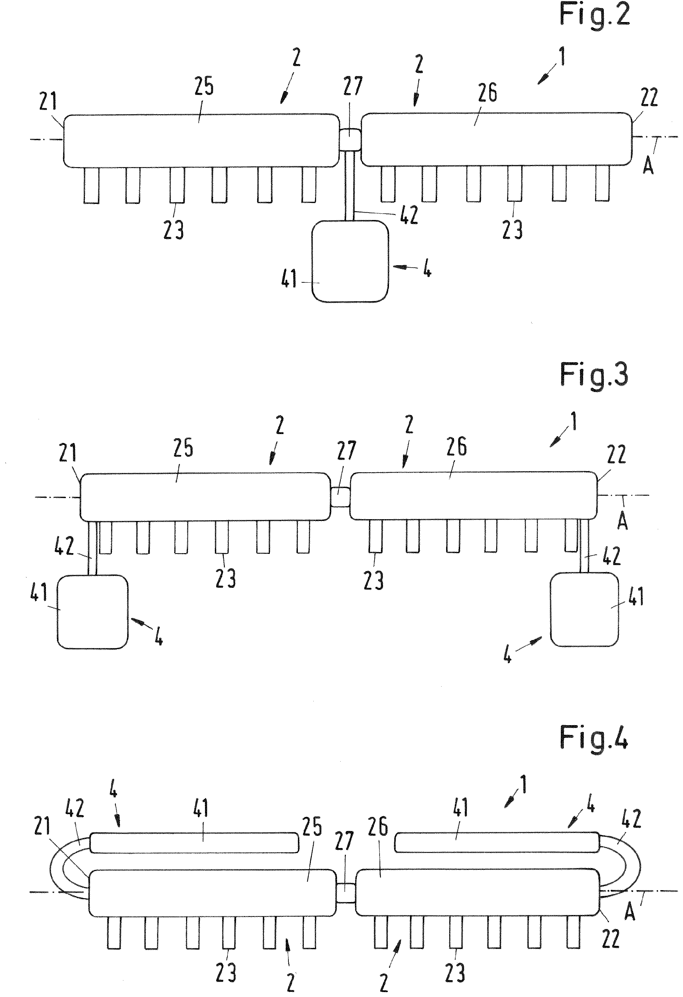

The exhaust receiver 2 of the exhaust receiver arrangement 1 is designed as a tubular exhaust receiver 2 extending from a first end 21 in an axial direction A to a second end 22. The exhaust receiver 2 extends along all of the cylinders 100. In the usual operating position shown in Fig. 1 (as well as in each of Fig. 2-10) the exhaust receiver 2 is arranged above the cylinders 100.

In the context of this application relative terms such as "above" or "below" always refer to the usual operating position illustrated in Fig. 1.

The inlet openings 23 for receiving the exhaust ducts 50 of the cylinders 100 are all arranged in a row extending in the axial direction A. The inlet openings 23 are located at the lower side of the exhaust receiver 2, i.e. at the side facing the cylinders 100.

In the embodiment shown in Fig. 1 the exhaust receiver 2 comprises two tubular elements, namely a first tubular element 25 and a second tubular element 26, which are arranged in-line and adjacent to each other with respect to the axial direction A. The first and the second tubular element 25, 26 are connected by a transition element 27, which is arranged between the first tubular element 25 and the second tubular element 26.

The first half of the cylinders 100 is connected to the first tubular element 25 and the second half of the cylinders 100 is connected to the second tubular element 26.

According to the invention the exhaust receiver arrangement 1 further comprises a damping device 3 for reducing pressure pulsations in the exhaust receiver 2, wherein the damping device 3 comprises at least one resonance absorber 4.

In the embodiment shown in Fig. 1 two resonance absorbers 4 are provided, wherein one resonance absorber 4 is connected to the first end 21 of the exhaust receiver 2 and one resonance absorber 4 is connected to the second end 22 of the exhaust receiver 2. Preferably each resonance absorber 4 is designed as a Helmholtz resonator 4 having a resonator volume 41 and a resonator neck 42 connected with the resonator volume 41.

The basic principle of the Helmholtz resonator 4 as such is well known in the art. Helmholtz resonators are used for example as silencer for noise protection or noise reduction. The Helmholtz resonator 4 works as a vibration absorber according to the principle of a mass-spring system. The mass of this system is represented by the gas in the resonator neck 42 and the spring is represented by the gas in the resonator volume 41. Thus, by adjusting the volume of the resonator volume 41 and(or the geometry of the resonator neck 42, the eigenfrequency of the Helmholtz resonator 4 may be tuned to a predefined or desired value.

The eigenfrequency of the Helmholtz resonator 4 is adjusted to correspond to the frequency of the pressure pulsation in the exhaust receiver 2. Usually, the main frequency of the pressure pulsation corresponds to one of the resonance frequencies of the exhaust receiver 2. The lowest resonance frequency of the exhaust receiver 2 is for example in the range of 10 Hertz. Typically the lowest resonance frequencies of the exhaust receiver 2 of a large two-stroke engine is at most 50 Hertz an in many cases in the range up to 30 Hertz. The Helmholtz resonator 4 is then configured to have an eigenfrequency which corresponds to this resonance frequency.

Consequently, the pressure pulsation at this eigenfrequency of the Helmholtz resonator 4 is considerably damped.

The resonance frequency of the exhaust receiver 2 or of the exhaust receiver arrangement 1, respectively, may be determined by an acoustic analysis, so that this resonance frequency or these resonance frequencies are known.

Of course, it is also possible to provide the exhaust receiver arrangement 1 with a plurality of Helmholtz resonators 4, for example two Helmholtz resonators 4, wherein the different Helmholtz resonators 4 have different eigenfrequencies, so that different resonance frequencies of the exhaust receiver arrangement 1 are damped by the different Helmholtz resonators 4.

The embodiment of the exhaust receiver arrangement 1 shown in Fig. 1 comprises two Helmholtz resonators 4, wherein one of the Helmholtz resonators 4 is connected to the first end 21 of the exhaust receiver 2 and the other Helmholtz resonator 4 is connected to the second end 22 of the exhaust receiver 2. More particularly, the resonator neck 42 of the respective Helmholtz resonator 4 is connected to the first end 21 of the exhaust receiver 2 or the second end 22 of the exhaust receiver 2, respectively. Both Helmholtz resonators 4 are arranged outside the exhaust receiver 2, so that each of the resonator volumes 41 constitutes an external volume, i.e. a volume that is not part of the exhaust receiver 2. Each Helmholtz resonator 4 is arranged in such a manner that the respective resonator neck 42 extends in the axial direction A, i.e. in the same direction as the exhaust receiver 2 extends.

Arranging the two Helmholtz resonator 4 externally at the first end 21 of the exhaust receiver 2 and at the second end 22, respectively, is a very simple design which may also be used very easily for retrofitting existing exhaust receiver arrangement 1.

As shown in Fig. 1 the two Helmholtz resonators 4 may be designed identically or for having the same eigenfrequency, respectively. Of course, it is also possible to configure the two Helmholtz resonators differently, so that they have different eigenfrequencies.

Furthermore, it is also possible to provide only a single Helmholtz resonator 4 which is arranged either at the first end 21 or at the second end 22 of the exhaust receiver 1.

Referring now to Fig. 2 - Fig. 10 additional embodiments of exhaust receiver arrangements 1 according to the invention will be explained. In this description of further embodiments only the differences to the first embodiment shown in Fig. 1 are explained in more detail. The explanations with respect to the first embodiment (Fig. 1) and its variants are also valid in the same way or in analogously the same way for the other embodiments. Same reference numerals designate the same features that have been explained with reference to Fig. 1 or functionally equivalent features.

It goes without saying that the different measures and designs illustrated in Fig. 1 - Fig. 10 may be combined to realize additional embodiments of an exhaust receiver arrangement 1 according to the invention.

In each of Fig. 2- Fig. 10 the representation of the cylinders 100 with the pistons 101 as well as the representation of the exhaust ducts 50 has been omitted, i.e. only the exhaust receiver arrangement 1 with the exhaust receiver 2 and the resonance absorber(s) are shown. Of course, also in the embodiments in Fig. 2 - Fig. 10 the inlet openings 23 are connected with exhaust ducts 50 in the same manner or in an analogous manner as shown in Fig. 1.

In the embodiment shown in Fig. 2 only one Helmholtz resonator 4 is provided. The resonator neck 42 of the Helmholtz resonator 4 is connected to the transition element 27, which is arranged between the first tubular element 25 and the second tubular element 26 of the exhaust receiver 2, so that the Helmholtz resonator 4 is in fluid communication with the transition element 27. The Helmholtz resonator 4 is arranged outside the exhaust receiver 2, so that the resonator volumes 41 constitutes an external volume, i.e. a volume that is not part of the exhaust receiver 2. The resonator neck 42 is configured to extend perpendicular to the axial direction A, i.e. in the vertical direction. The Helmholtz resonator 4 is arranged below the exhaust receiver 2. This embodiment is very compact and does not require additional space for the Helmholtz resonator 4.

In the embodiment shown in Fig. 3 the exhaust receiver arrangement 1 comprises two Helmholtz resonators 4, wherein one of the Helmholtz resonators 4 is connected to the first end 21 of the exhaust receiver 2 and the other Helmholtz resonator 4 is connected to the second end 22 of the exhaust receiver 2. More particularly, the resonator neck 42 of the respective Helmholtz resonator 4 is connected to the first end 21 of the exhaust receiver 2 or the second end 22 of the exhaust receiver 2, respectively. Both Helmholtz resonators 4 are arranged outside the exhaust receiver 2, so that each of the resonator volumes 41 constitutes an external volume, i.e. a volume that is not part of the exhaust receiver 2. Each Helmholtz resonator 4 is arranged in such a manner that the respective resonator neck 42 extends in the vertical direction, i.e. perpendicular to the axial direction A. Each Helmholtz resonator 4 is arranged below the exhaust receiver2.

In the embodiment shown in Fig. 4 the exhaust receiver arrangement 1 comprises two Helmholtz resonators 4, wherein one of the Helmholtz resonators 4 is connected to the first end 21 of the exhaust receiver 2 and the other Helmholtz resonator 4 is connected to the second end 22 of the exhaust receiver 2. More particularly, the resonator neck 42 of the respective Helmholtz resonator 4 is connected to the first end 21 of the exhaust receiver 2 or the second end 22 of the exhaust receiver 2, respectively. Both Helmholtz resonators 4 are arranged outside the exhaust receiver 2, so that each of the resonator volumes 41 constitutes an external volume, i.e. a volume that is not part of the exhaust receiver 2.

Both resonator volumes 41 are arranged above the exhaust receiver 2 and extend in each case parallel to the tubular exhaust receiver 2. Each resonator neck 42 is configured as a bended resonator neck 42 having a U-shaped design. The bended resonator necks 42 are connected to the respective end face at the first end 21 and the second end 22 of the exhaust receiver 2, and extend from there in a curved manner to the respective resonator volume 41 arranged above the exhaust receiver 2.

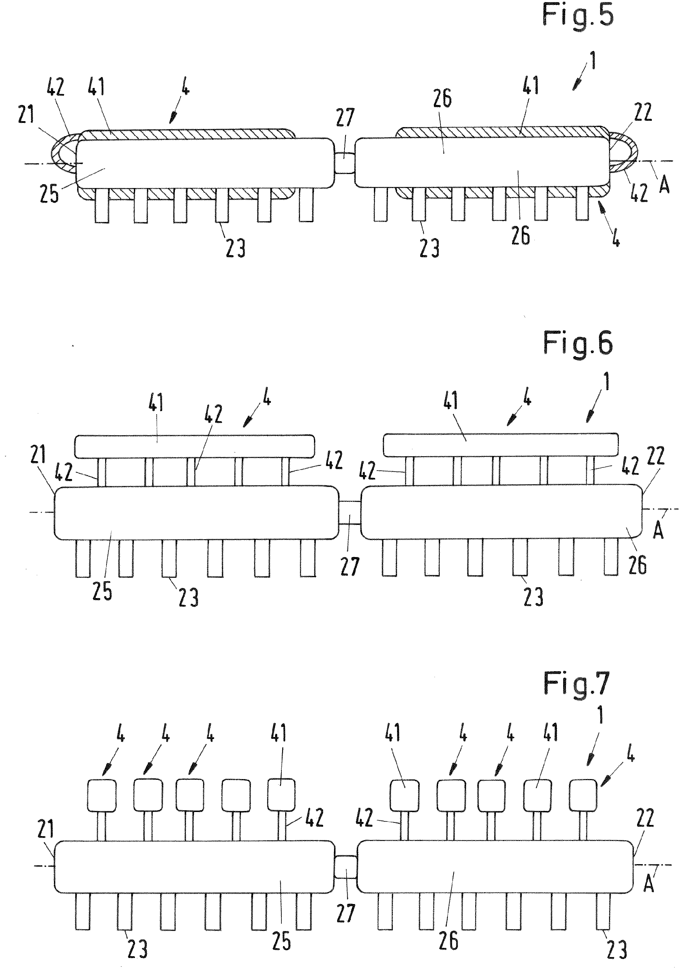

In the embodiment shown in Fig. 5 the exhaust receiver arrangement 1 comprises two Helmholtz resonators 4, wherein one of the Helmholtz resonators 4 is connected to the first end 21 of the exhaust receiver 2 and the other Helmholtz resonator 4 is connected to the second end 22 of the exhaust receiver 2. More particularly, the resonator neck 42 of the respective Helmholtz resonator 4 is connected to the end face at the first end 21 of the exhaust receiver 2 or to the end face at the second end 22 of the exhaust receiver 2, respectively. Both Helmholtz resonators 4 are arranged outside the exhaust receiver 2, so that each of the resonator volumes 41 constitutes an external volume, i.e. a volume that is not part of the exhaust receiver 2.

Each resonator volume 41 is arranged to coaxially surround the exhaust receiver 2. One of the resonator volumes 41 surrounds the first tubular element 25 and the other resonator volume 41 surrounds the second tubular element 26 of the exhaust receiver 2.

Similar as in the embodiment shown in Fig. 4 each resonator neck 42 is configured as a bended resonator neck 42 having a U-shaped design. The bended resonator necks 42 are connected to the respective end face at the first end 21 and the second end 22 of the exhaust receiver 2, and extend from there in a curved manner to the respective resonator volume 41 designed to surround the receiver 2.

In the embodiment shown in Fig. 6 the exhaust receiver arrangement 1 comprises two Helmholtz resonators 4, each of which is arranged above the exhaust receiver 1. One of the Helmholtz resonators 4 is arranged above the first tubular element 25 and the other Helmholtz resonator 4 is arranged above the second tubular element 26

Both Helmholtz resonators 4 are arranged outside the exhaust receiver 2, so that each of the resonator volumes 41 constitutes an external volume, i.e. a volume that is not part of the exhaust receiver 2.

Both resonator volumes 41 are arranged above the exhaust receiver 2 and extend in each case parallel to the tubular exhaust receiver 2. Each resonator volume 41 is connected to the exhaust receiver by a plurality of resonator necks 42, here five resonator necks 42. All resonator necks 42 are arranged to extend perpendicular to the axial direction A, i.e. in the vertical direction. In addition, all resonator necks 42 extend parallel. The number five of the resonator necks 42 is only exemplary. It is also possible that each Helmholtz resonator 4 comprises more or less than five resonator necks 42, for example only one resonator neck 42.

In the embodiment shown in Fig. 7 the exhaust receiver arrangement 1 comprises a plurality of Helmholtz resonators 4, for example ten Helmholtz resonators 4, each of which is arranged above the exhaust receiver 1. Thus, all Helmholtz resonators 4 are arranged outside the exhaust receiver 2, so that each of the resonator volumes 41 constitutes an external volume, i.e. a volume that is not part of the exhaust receiver 2.

The plurality of Helmholtz resonators 4 are arranged along the length of the exhaust receiver 2. Each Helmholtz resonator 4 comprises a separate resonator volume 41 as well as a separate resonator neck 42.

Half of the Helmholtz resonators 4 is arranged above the first tubular element 25 and the other half of the Helmholtz resonators 4 is arranged above the second tubular element 26.

Each resonator volume 41 is connected to the exhaust receiver 2 by exactly one resonator neck 42. All resonator necks 42 are arranged to extend perpendicular to the axial direction A, i.e. in the vertical direction. In addition, all resonator necks 42 extend parallel. The number ten of the Helmholtz resonators 4 is only exemplary. It is also possible that the exhaust receiver arrangement 1 comprises more or less than ten Helmholtz resonators 4.

This embodiment has the advantage that in some applications it will be easier to find space for a plurality of smaller resonator volumes 41 rather than one or two larger resonator volumes.

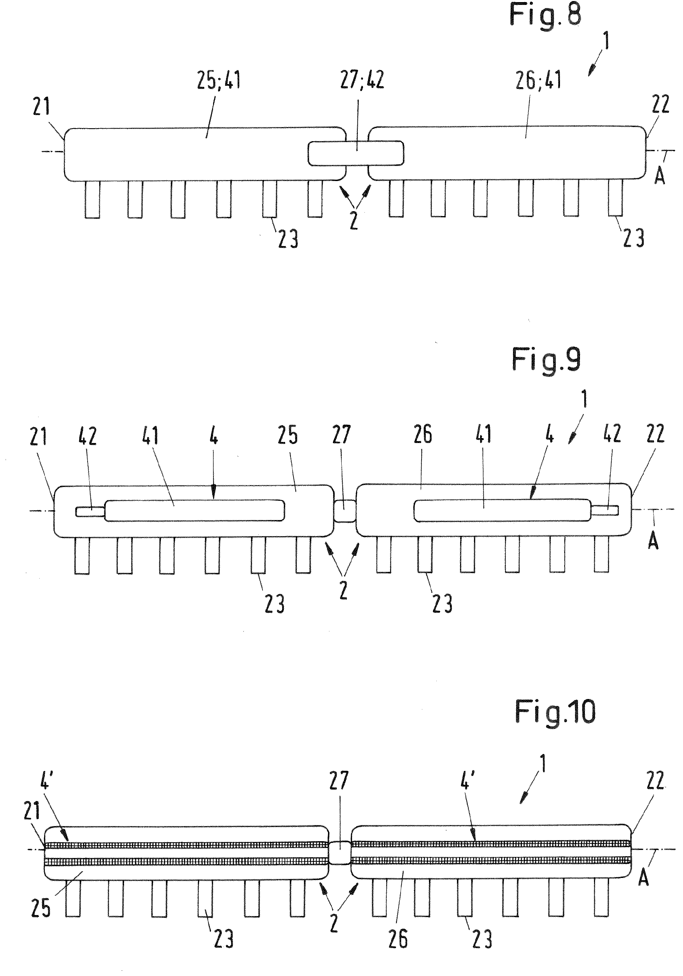

In the embodiment shown in Fig. 8 one of the tubular elements 25 or 26 and the transition element 27 of the exhaust receiver 2 are configured to form a Helmholtz resonator 4. The transition element 27 is designed as the resonator neck 42 of the Helmholtz resonator 4 and the first tubular element 25 and/or the second tubular element 26 of the exhaust receiver 2 are designed as a resonator volume 41.

It is possible that each of the tubular elements 25, 26 forms a resonator volume 41 or that only one of the tubular elements 25, 26 forms a resonator volume 4. This means, the transition element 27 as resonator neck 42 may form a Helmholtz resonator 4 with the first tubular element 25 as resonator volume 41 or with the second tubular element 26 as resonator volume 41, or the transition element 27 as resonator neck 42 may form a first Helmholtz resonator 4 with the first tubular element 25 as resonator volume 41 as well as a second Helmholtz resonator 4 with the second tubular element 26 as resonator volume 41.

In the embodiment according to Fig. 8 each resonator volume 41 constitutes an internal volume of the exhaust receiver 2, i.e. a volume that is part of the exhaust receiver 2.

The eigenfrequency of the Helmholtz resonator 4 formed by the transition element 27 and one of the tubular elements 25, 26 may be tuned to a desired value by the geometry of the transition element 27 constituting the resonator neck 42 of the Helmholtz resonator 4. By appropriately dimensioning the length and the diameter of the transition element 27 the respective Helmholtz resonator may be tuned to have the desired eigenfrequency for damping the pressure pulsations in the exhaust receiver 2.

The embodiment according to Fig. 8 has the advantage that it is a very integrated design with particularly low space requirements.

In the embodiment shown in Fig. 9 the exhaust receiver arrangement 1 comprises two Helmholtz resonators 4, each of which is arranged inside the exhaust receiver 2. One of the Helmholtz resonators 4 is arranged within the first tubular element 25 and the other Helmholtz resonator 4 is arranged within the second tubular element 26. Thus, each resonator volume 41 constitutes an internal volume of the exhaust receiver 2, i.e. a volume that is part of the exhaust receiver 2.

The resonator necks 42 are arranged adjacent to the first end 21 and the second end 22, respectively, of the exhaust receiver 2, so that each resonator neck 42 is located next to an antinode of the pressure oscillation. This results in a very efficient damping of the pressure pulsation by the respective Helmholtz resonator 4.

In the embodiment shown in Fig. 10 the exhaust receiver arrangement 1 comprises two resonance absorbers 4', each of which is arranged inside the exhaust receiver 2. One of the resonance absorbers 4' is arranged within the first tubular element 25 and the other resonance absorber 4' is arranged within the second tubular element 26.

Each resonance absorber 4' is designed comparable to a muffler and is extending in the axial direction A entirely through the respective first or second tubular element 25 or 26.

Each resonance absorber 4' is designed as a tube or a pipe having a perforated wall. Each resonance absorber 4' is arranged coaxially with the respective first or second tubular element 25, 26.

The configuration of the resonance absorber of the exhaust receiver arrangement 1 according to the invention is not restricted to a Helmholtz resonator. In principle each type of resonance absorber is suited for the invention. The resonance absorber may be designed, for example, as a quarter-wave resonator.

## Claims

1. An exhaust receiver arrangement for a large two-stroke engine having a plurality of cylinders (100), wherein the exhaust receiver arrangement comprises a tubular exhaust receiver (2) for collecting exhaust gas from the cylinders (100), with the exhaust receiver (2) extending from a first end (21) in an axial direction (A) to a second end (22) and being designed for extending along the cylinders (100), and wherein the exhaust receiver (2) comprises a plurality of inlet openings (23) for receiving exhaust ducts (50) of the cylinders (100), wherein a damping device (3) is provided for reducing pressure pulsations in the exhaust receiver (2), wherein the damping device (3) comprises at least one resonance absorber (4, 4'), wherein each resonance absorber (4, 4') is configured to dampen a resonance frequency of the exhaust receiver (2) such that, by reducing the pressure pulsations in the exhaust receiver, an unbalance of a scavenging process for the cylinders is reduced,
**characterized in that** the exhaust receiver (2) comprises two tubular elements (25, 26), which are arranged in-line, and which are connected by a transition element (27) arranged between the two tubular elements (25, 26).

2. The exhaust receiver arrangement in accordance with any one of the preceding claims, wherein each resonance absorber (4, 4') is configured to dampen a frequency of at most 50 Hertz, preferably of at most 30 Hertz.

3. The exhaust receiver arrangement in accordance with any one of the preceding claims, wherein the resonance absorber (4, 4') is designed as a Helmholtz resonator (4) having a resonator volume (41) and a resonator neck (42) connected with the resonator volume (41), and wherein the resonator neck (42) is in fluid communication with the tubular exhaust receiver (2).

4. The exhaust receiver arrangement in accordance with claim 3, wherein the neck (42) of the Helmholtz resonator (4) is connected to the first end (21) or to the second end (22) of the exhaust receiver (2).

5. The exhaust receiver arrangement in accordance with any one of the preceding claims, wherein the damping device (3) comprises at least two resonance absorbers (4), each of which is designed as a Helmholtz resonator (4), and wherein the first end and the second end (21, 22) of the exhaust receiver (2) are connected to the resonator neck (42) of one of the resonance absorbers (4).

6. The exhaust receiver arrangement in accordance with any one of claims 3-5, wherein each resonator neck (42) is extending in the axial direction (A) or perpendicular to the axial direction (A).

7. The exhaust receiver arrangement in accordance with any one of the preceding claims, wherein each resonance absorber (4) is arranged above the exhaust receiver (2) or below the exhaust receiver (2).

8. The exhaust receiver arrangement in accordance with any one of the preceding claims, wherein the resonance absorber (2) is connected to the transition element (27), or wherein the transition element (27) and one of the tubular elements (25, 26) are configured to form a Helmholtz resonator (4).

9. The exhaust receiver arrangement in accordance with any one of claims 1-3, wherein the resonance absorber (4, 4') is arranged inside the exhaust receiver.

10. The exhaust receiver arrangement in accordance with claim 9, wherein the resonance absorber (4') comprises a perforated tube arranged coaxially with the exhaust receiver (2).

11. The exhaust receiver arrangement in accordance with claim 3, wherein the resonator volume (41) coaxially surrounds the exhaust receiver (2).

12. The exhaust receiver arrangement in accordance with any one of the preceding claims wherein the damping device (3) comprises a plurality of resonance absorbers (4, 4') for damping different frequencies of the pressure pulsations.

13. A large two-stroke engine, in particular a large two-stroke diesel engine with longitudinal scavenging, comprising a plurality of cylinders (100), wherein each cylinder (100) has a combustion chamber (102) for a fuel, and further comprising an exhaust receiver arrangement (1) according to any one of the preceding claims.

14. The large two-stroke engine in accordance with claim 13, designed as a dual-fuel large diesel engine, which is operable in a gas mode, in which a gaseous fuel is supplied to the combustion chambers (102), and which is operable in a liquid mode, in which a liquid fuel is supplied to the combustion chambers (102).

## Patentansprüche

1. Abgasauffangvorrichtung für einen Zweitakt-Grossmotor mit einer Vielzahl von Zylindern (100), wobei die Abgasauffangvorrichtung einen rohrförmigen Abgasfänger zum Sammeln von Abgas aus den Zylindern (100) umfasst, wobei sich der Abgasfänger (2) von einem ersten Ende (21) in einer axialen Richtung (A) zu einem zweiten Ende (22) erstreckt und so ausgelegt ist, dass er sich entlang der Zylinder (100) erstreckt, und wobei der Abgasfänger (2) eine Vielzahl von Einlassöffnungen (23) zur Aufnahme von Abgasleitungen (50) der Zylinder (100) umfasst, wobei eine Dämpfungsvorrichtung (3) zur Reduzierung von Druckpulsationen in dem Abgasfänger (2) vorgesehen ist, wobei die Dämpfungsvorrichtung (3) mindestens einen Resonanzabsorber (4, 4') umfasst, wobei jeder Resonanzabsorber (4, 4') so konfiguriert ist, dass er eine Resonanzfrequenz des Abgasfängers (2) dämpft, so dass durch die Reduzierung der Druckpulsationen im Abgasfänger eine Ungleichmäßigkeit eines Spülvorgangs für die Zylinder reduziert wird,
**dadurch gekennzeichnet, dass** der Abgasfängers (2) zwei rohrförmige Elemente (25, 26) umfasst, die in Reihe angeordnet sind und durch ein zwischen den beiden rohrförmigen Elementen (25, 26) angeordnetes Übergangselement (27) verbunden sind.

2. Abgasauffangvorrichtung nach einem der vorangehenden Ansprüche, wobei jeder Resonanzabsorber (4, 4') so konfiguriert ist, dass er eine Frequenz von höchstens 50 Hertz, vorzugsweise von höchstens 30 Hertz, dämpft.

3. Abgasauffangvorrichtung nach einem der vorangehenden Ansprüche, wobei der Resonanzabsorber (4, 4') als Helmholtz-Resonator (4) mit einem Resonatorvolumen (41) und einem mit dem Resonatorvolumen (41) verbundenen Resonatorhals (42) ausgebildet ist, und wobei der Resonatorhals (42) in Fluidverbindung mit dem rohrförmigen Abgasfänger (2) steht.

4. Abgasauffangvorrichtung nach Anspruch 3, wobei der Hals (42) des Helmholtz-Resonators (4) mit dem ersten Ende (21) oder dem zweiten Ende (22) des Abgasfängers (2) verbunden ist.

5. Abgasauffangvorrichtung nach einem der vorangehenden Ansprüche, wobei die Dämpfungsvorrichtung (3) mindestens zwei Resonanzabsorber (4) umfasst, von denen jeder als Helmholtz-Resonator (4) ausgebildet ist, und wobei das erste Ende und das zweite Ende (21, 22) des Abgasfängers (2) mit dem Resonatorhals (42) eines der Resonanzabsorber (4) verbunden sind.

6. Abgasauffangvorrichtung nach einem der vorangehenden Ansprüche 3 bis 5, wobei sich jeder Resonatorhals (42) in axialer Richtung (A) oder senkrecht zur axialen Richtung (A) erstreckt.

7. Abgasauffangvorrichtung nach einem der vorangehenden Ansprüche, wobei jeder Resonanzabsorber (4) oberhalb des Abgasfängers (2) oder unterhalb des Abgasfängers (2) angeordnet ist.

8. Abgasauffangvorrichtung nach einem der vorangehenden Ansprüche, wobei der Resonanzabsorber (2) mit dem Übergangselement (27) verbunden ist oder wobei das Übergangselement (27) und eines der rohrförmigen Elemente (25, 26) so konfiguriert sind, dass sie einen Helmholtz-Resonator (4) bilden.

9. Abgasauffangvorrichtung nach einem der vorangehenden Ansprüche 1 bis 3, wobei der Resonanzabsorber (4, 4') innerhalb des Abgasfängers angeordnet ist.

10. Abgasauffangvorrichtung nach Anspruch 9, wobei der Resonanzabsorber (4') ein perforiertes Rohr umfasst, das koaxial zum Abgasfänger (2) angeordnet ist.

11. Abgasauffangvorrichtung nach Anspruch 3, wobei das Resonatorvolumen (41) den Abgasfänger (2) koaxial umgibt.

12. Abgasauffangvorrichtung nach einem der vorangehenden Ansprüche, wobei die Dämpfungsvorrichtung (3) eine Vielzahl von Resonanzabsorbern (4, 4') zum Dämpfen unterschiedlicher Frequenzen der Druckpulsationen umfasst.

13. Zweitakt-Grossmotor, insbesondere Zweitakt-Grossdieselmotor mit Längsspülung, der eine Vielzahl von Zylindern (100) umfasst, wobei jeder Zylinder (100) eine Verbrennungskammer (102) für einen Brennstoff aufweist, und der ferner eine Abgasauffangvorrichtung (1) nach einem der vorhergehenden Ansprüche umfasst.

14. Zweitakt-Grossmotor nach Anspruch 13, der als Doppelbrennstoff-Grossdieselmotor ausgebildet ist, der in einem Gasmodus betrieben werden kann, in dem ein gasförmiger Brennstoff den Verbrennungskammern (102) zugeführt wird, und der in einem Flüssigmodus betrieben werden kann, in dem ein flüssiger Brennstoff den Verbrennungskammern (102) zugeführt wird.

## Revendications

1. Agencement de collecteur d'échappement pour un gros moteur à deux temps ayant une pluralité de cylindres (100), dans lequel l'agencement de collecteur d'échappement comprend un collecteur d'échappement tubulaire (2) pour collecter des gaz d'échappement des cylindres (100), le collecteur d'échappement (2) s'étendant d'une première extrémité (21) dans une direction axiale (A) à une seconde extrémité (22) et étant conçu pour s'étendre le long des cylindres (100), et dans lequel le collecteur d'échappement (2) comprend une pluralité d'ouvertures d'entrée (23) pour recevoir des conduits d'échappement (50) des cylindres (100), dans lequel un dispositif d'amortissement (3) est prévu pour réduire des pulsations de pression dans le collecteur d'échappement (2), dans lequel le dispositif d'amortissement (3) comprend au moins un amortisseur de résonance (4, 4'), dans lequel chaque amortisseur de résonance (4, 4') est configuré pour amortir une fréquence de résonance du collecteur d'échappement (2) de sorte que, en réduisant les pulsations de pression dans le collecteur d'échappement, un déséquilibre d'un processus de balayage pour les cylindres soit réduit,
**caractérisé en ce que** le collecteur d'échappement (2) comprend deux éléments tubulaires (25, 26), qui sont agencés en ligne, et qui sont reliés par un élément de transition (27) agencé entre les deux éléments tubulaires (25, 26).

2. Agencement de collecteur d'échappement selon l'une quelconque des revendications précédentes, dans lequel chaque amortisseur de résonance (4, 4') est configuré pour amortir une fréquence d'au plus 50 Hertz, de préférence d'au plus 30 Hertz.

3. Agencement de collecteur d'échappement selon l'une quelconque des revendications précédentes, dans lequel l'amortisseur de résonance (4, 4') est conçu comme un résonateur de Helmholtz (4) ayant un volume de résonateur (41) et un col de résonateur (42) relié au volume de résonateur (41), et dans lequel le col de résonateur (42) est en communication fluidique avec le collecteur d'échappement tubulaire (2).

4. Agencement de collecteur d'échappement selon la revendication 3, dans lequel le col (42) du résonateur de Helmholtz (4) est relié à la première extrémité (21) ou à la seconde extrémité (22) du collecteur d'échappement (2).

5. Agencement de collecteur d'échappement selon l'une quelconque des revendications précédentes, dans lequel le dispositif d'amortissement (3) comprend au moins deux amortisseurs de résonance (4), dont chacun est conçu comme un résonateur de Helmholtz (4), et dans lequel la première extrémité et la seconde extrémité (21, 22) du collecteur d'échappement (2) sont reliées au col de résonateur (42) de l'un des amortisseurs de résonance (4).

6. Agencement de collecteur d'échappement selon l'une quelconque des revendications 3-5, dans lequel chaque col de résonateur (42) s'étend dans la direction axiale (A) ou perpendiculairement à la direction axiale (A).

7. Agencement de collecteur d'échappement selon l'une quelconque des revendications précédentes, dans lequel chaque amortisseur de résonance (4) est agencé au-dessus du collecteur d'échappement (2) ou en dessous du collecteur d'échappement (2).

8. Agencement de collecteur d'échappement selon l'une quelconque des revendications précédentes, dans lequel l'amortisseur de résonance (2) est relié à l'élément de transition (27), ou dans lequel l'élément de transition (27) et l'un des éléments tubulaires (25, 26) sont configurés pour former un résonateur de Helmholtz (4).

9. Agencement de collecteur d'échappement selon l'une quelconque des revendications 1-3, dans lequel l'amortisseur de résonance (4, 4') est agencé à l'intérieur du collecteur d'échappement.

10. Agencement de collecteur d'échappement selon la revendication 9, dans lequel l'amortisseur de résonance (4') comprend un tube perforé agencé coaxialement au collecteur d'échappement (2).

11. Agencement de collecteur d'échappement selon la revendication 3, dans lequel le volume de résonateur (41) entoure coaxialement le collecteur d'échappement (2).

12. Agencement de collecteur d'échappement selon l'une quelconque des revendications précédentes, dans lequel le dispositif d'amortissement (3) comprend une pluralité d'amortisseurs de résonance (4, 4') pour amortir différentes fréquences des pulsations de pression.

13. Gros moteur à deux temps, en particulier gros moteur diesel à deux temps avec balayage longitudinal, comprenant une pluralité de cylindres (100), dans lequel chaque cylindre (100) a une chambre de combustion (102) pour un carburant, et comprenant en outre un agencement de collecteur d'échappement (1) selon l'une quelconque des revendications précédentes.

14. Gros moteur à deux temps selon la revendication 13, conçu comme un gros moteur diesel bicarburant, qui peut fonctionner dans un mode gazeux, dans lequel un carburant gazeux est fourni aux chambres de combustion (102), et qui peut fonctionner dans un mode liquide, dans lequel un carburant liquide est fourni aux chambres de combustion (102).
